# EUROPEAN PATENT APPLICATION

(11) **EP 2 482 555 A2**
(43) Date of publication of application: **01.08.2012**
(21) Application number: 10818999.4
(22) Date of filing: 16.09.2010
(51) Int. Cl.: H04N 7/173, H04H 60/82

(54) **DIGITAL DEVICE ABLE TO ACCESS BROADCAST NETWORKS AND IP NETWORKS, AND A CONTROL METHOD THEREFOR**

(30) Priority: 25.09.2009 US 245665 P
(71) Applicant: LG Electronics Inc., Seoul 150-721 (KR)
(72) Inventor: HONG, Ho Taek, Seoul 137-724 (KR); CHOI, Jong Sung, Seoul 137-724 (KR); KIM, Jin Pil, Seoul 137-724 (KR); LEE, Ho Min, Seoul 137-724 (KR); LEE, Joon Hui, Seoul 137-724 (KR)
(74) Representative: Gunzelmann, Rainer
(86) International application number: PCT/KR2010/006331
(87) International publication number: WO 2011/037358

(57) **Abstract**

In one embodiment of the present invention, a digital device able to access broadcast networks and IP (internet protocol) networks comprises: a tuner for receiving broadcast data via a broadcast network; a network interface for receiving IP signals via an IP network; a service manager for detecting data identifying an Internet service channel on which IP signals contained in the broadcast data can be received; and a controller which effects control in such a way as to ensure access to the Internet service channel on which IP signals can be received, based on the detected data.

## Description

### [Technical Field]

The present invention relates to a broadcast system, and more particularly, to a digital device able to access broadcast networks and Internet Protocol (IP) networks and a control method therefor.

### [Background Art]

In recent years, technologies to enable Internet access using devices other than conventional PCs have been discussed. For example, some devices, such as a Digital Television (DTV), a Hybrid Broadcast Broadband TV (HBBTV), and the like, enable access to Internet Protocol (IP) networks. However, when using the related art, a user can access a desired Internet service only after selecting a menu required to access the corresponding Internet service, and thereafter implementing several steps. Therefore, access to the Internet service takes a significantly long time and it is difficult to invigorate the event of using an Internet service by means of a device, such as a TV, and the like.

### [Disclosure]

### [Technical Problem]

A technical object of one embodiment of the present invention is to provide a protocol for assisting a digital device able to access broadcast networks and IP networks in more rapidly accessing an Internet service.

A technical object of another embodiment of the present invention is to provide a solution for processing an Internet service without error both in the case in which IP signals are independent of a particular broadcast channel and in the case in which IP signals are mapped to a particular broadcast channel.

A technical object of a further embodiment of the present invention is to provide a method for returning to content of a related broadcast channel in the middle of processing IP signals.

### [Technical Solution]

To solve the above described technical objects and in accordance with one embodiment of the present invention, there is provided a method for controlling a digital device able to access broadcast networks and Internet protocol (IP) networks, including receiving broadcast data via a broadcast network, receiving IP signals via an IP network, detecting data identifying an Internet service channel on which IP signals contained in the broadcast data can be received, and accessing the Internet service channel on which the IP signals can be received, based on the detected data.

In another aspect of the present invention, there is provided a digital device able to access broadcast networks and Internet protocol (IP) networks, including a tuner for receiving broadcast data via a broadcast network, a network interface for receiving IP signals via an IP network, a service manager for detecting data identifying an Internet service channel on which IP signals contained in the broadcast data can be received, and a controller which effects control in such a way as to ensure access to the Internet service channel on which the IP signals can be received, based on the detected data.

### [Advantageous Effects]

According to one embodiment of the present invention, there is provided a protocol for assisting a digital device able to access broadcast networks and IP networks in more rapidly accessing an Internet service.

Further, according to another embodiment of the present invention, there is provided a solution for processing an Internet service without error both in the case in which IP signals are independent of a particular broadcast channel and in the case in which IP signals are mapped to a particular broadcast channel.

Furthermore, according to a further embodiment of the present invention, there is provided a method for returning to content of a related broadcast channel in the middle of processing IP signals.

### [Description of Drawings]

FIG. 1 is a diagram showing an entire system related to an HBBTV according to an embodiment of the present invention.

FIG. 2 is a diagram showing a process of accessing an Internet service according to general technology.

FIG. 3 is a diagram showing a process of accessing an Internet service according to an embodiment of the present invention.

FIG. 4 is a diagram showing a method for newly defining PSI/SI data in order to access an Internet service channel related to a broadcast channel according to an embodiment of the present invention.

FIG. 5 is a diagram showing syntax of a logical channel descriptor shown in FIG. 4 in more detail.

FIG. 6 is a diagram showing syntax of a Network Information Table (NIT) as one example of a table to which the logical channel descriptor shown in FIG. 5 can belong.

FIG. 7 is a diagram showing a process of implementing a channel scanning sequence using a newly defined logical channel descriptor according to an embodiment of the present invention.

FIG. 8 is a diagram showing a process of implementing a book marking sequence using a newly defined logical channel descriptor according to an embodiment of the present invention.

FIG. 9 is a view showing a method for newly defining PSI/SI data in order to access an Internet service channel independent of a broadcast channel according to another embodiment of the present invention.

FIG. 10 is a diagram showing syntax of a logical channel descriptor shown in FIG. 9 in more detail.

FIG. 11 is a diagram showing a process of implementing a channel scanning sequence using a newly defined logical channel descriptor according to another embodiment of the present invention.

FIG. 12 is a view showing a method for updating an Internet service list independent of a broadcast channel using a newly defined logical channel descriptor according to another embodiment of the present invention.

FIG. 13 is a diagram showing a user interface to rapidly access an Internet service channel according to an embodiment of the present invention.

FIG. 14 is a diagram showing a user interface to rapidly access an Internet service channel according to another embodiment of the present invention.

FIG. 15 is a diagram showing a method for constructing a channel map by grouping a plurality of services according to an embodiment of the present invention.

FIG. 16 is a diagram showing first data required to return to content of a related broadcast channel in the middle of processing IP signals according to another embodiment of the present invention.

FIG. 17 is a diagram showing second data required to return to content of a related broadcast channel in the middle of processing IP signals according to another embodiment of the present invention.

FIG. 18 is a diagram showing third data required to return to content of a related broadcast channel in the middle of processing IP signals according to another embodiment of the present invention.

FIG. 19 is a diagram showing fourth data required to return to content of a related broadcast channel in the middle of processing IP signals according to another embodiment of the present invention.

FIG. 20 is a diagram showing fifth data required to return to content of a related broadcast channel in the middle of processing IP signals according to another embodiment of the present invention.

FIG. 21 is a diagram showing a module of a digital device able to access broadcast networks and IP networks according to an embodiment of the present invention.

FIG. 22 is a diagram showing a module of a digital device able to access broadcast networks and IP networks according to another embodiment of the present invention.

### [Best Mode]

Hereinafter, although the preferred embodiments of the present invention will be described in detail with reference to the accompanying drawings and contents as described with relation to the accompanying drawings, it is to be understood that the present invention is not limited to the embodiments.

All terms used in the following description are selected from among general terms that are currently widely used while taking into consideration the functions obtained in accordance with the present invention. The terms, however, may be changed based on the intensions of those skilled in the art or customs, or the appearance of new technologies.

In addition, in particular cases, the terms arbitrarily selected by the applicant of the invention are used. In this case, the meaning of the terms will be described in the corresponding context of describing the terms. Accordingly, it is noted that the terms used herein are not interpreted simply using names of the terms, but interpreted based on actual meanings of the terms and the content of the entire description of the present invention.

Hereinafter, the term "digital device" is used. The digital device, for example, may correspond to a Digital Television (DTV), a Hybrid Broadcast Broadband Television (HBBTV), an Internet Protocol Television (IPTV), a mobile phone, a smart phone, and the like.

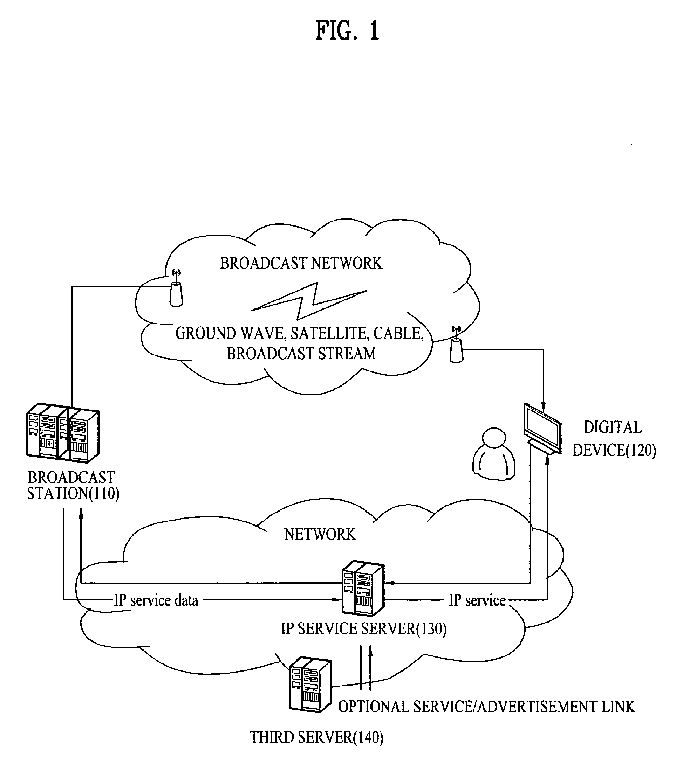

FIG. 1 is a diagram showing an entire system related to an HBBTV according to an embodiment of the present invention. The entire system related to an HBBTV according to the embodiment of the present invention will hereinafter be described with reference to FIG. 1.

As shown in FIG. 1, the entire system related to an HBBTV according to the embodiment of the present invention, for example, may include a broadcast station 110, a digital device 120, an IP service server 130, and a third server 140.

The broadcast station 110 transmits a broadcast stream to the digital device 120 using a broadcast network. The broadcast stream, for example, may be transmitted via ground waves, satellites, and cables.

The IP service server 130 can perform reception and transmission of data related to an IP service with the broadcast station 110 and the digital device 120. The third server 140 performs reception and transmission of optional services, advertisement link data, and the like with the IP service server 130.

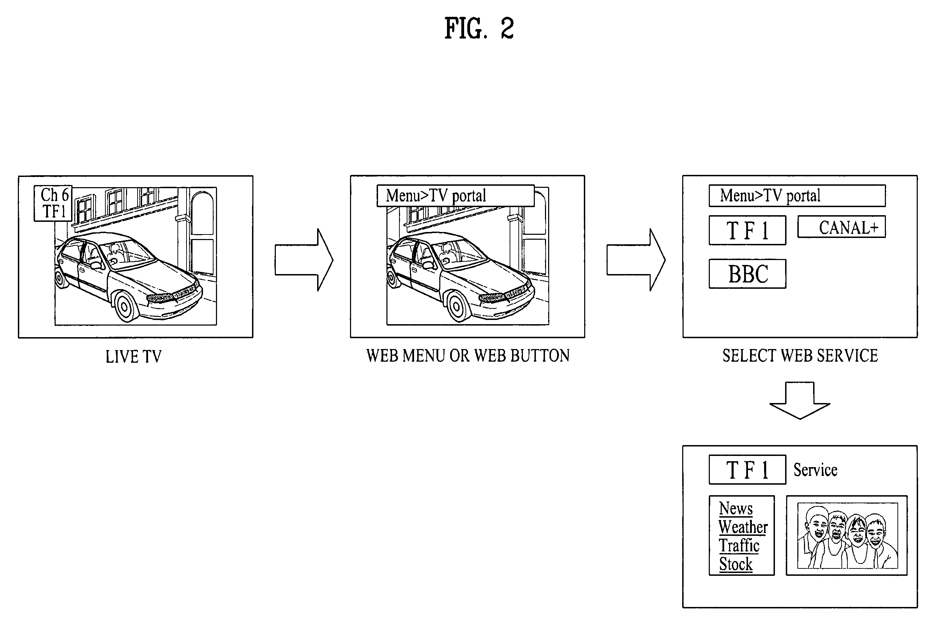

FIG. 2 is a diagram showing a process of accessing an Internet service according to general technology. The process of accessing an Internet service according to general technology will hereinafter be described with reference to FIG. 2.

As shown in FIG. 2, according to the related art, when a user who is viewing a broadcast attempts to access an Internet service, the user must implement a great number of steps. For example, this requires a process of selecting a web menu or a web button in a first step, selecting a particular web service in a second step, and selecting particular content in a third step. However, displaying a great number of guide screens after displaying, e.g., a menu screen causes time/cost loss.

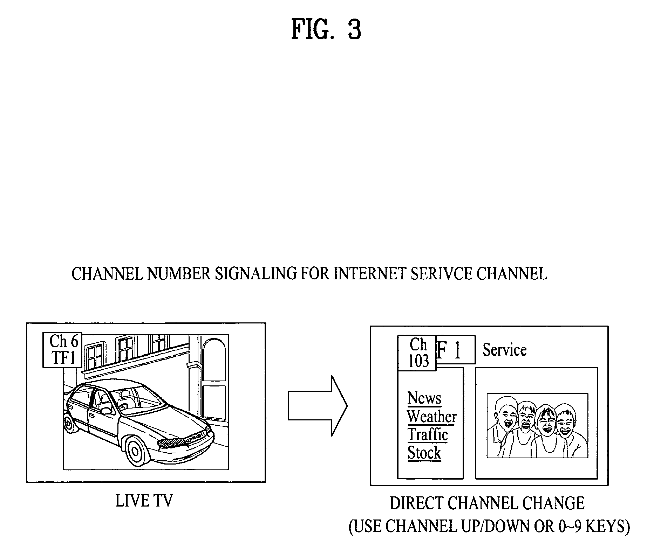

FIG. 3 is a diagram showing a process of accessing an Internet service according to an embodiment of the present invention. The process of accessing an Internet service according to the embodiment of the present invention will hereinafter be described with reference to FIG. 3.

According to the embodiment of the present invention shown in FIG. 3, differently from FIG. 2, the user can directly switch to a channel, on which an Internet service is provided, without implementing the aforementioned time consuming step for displaying a great number of guide screens. A method for realizing this direct channel change will hereinafter be described in more detail with reference to the drawings.

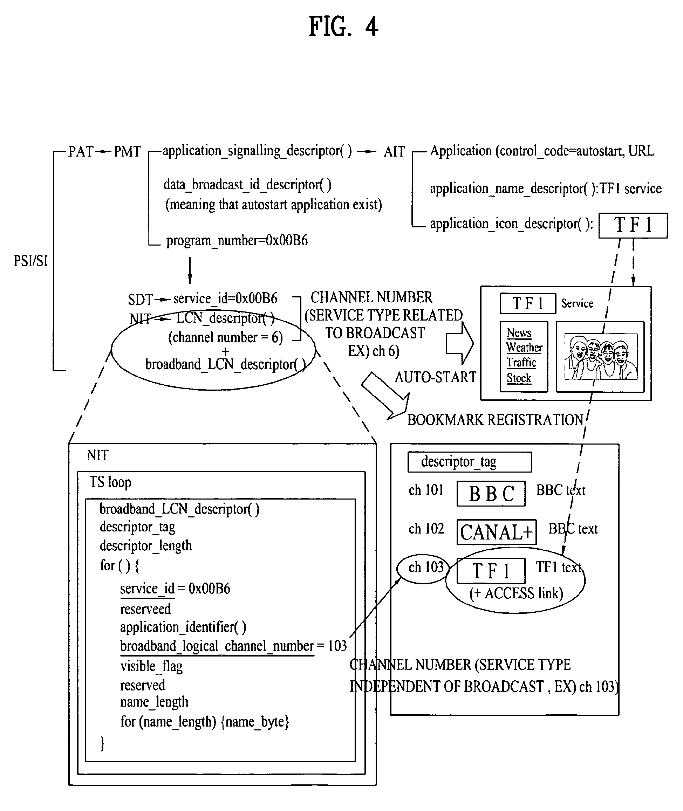

FIG. 4 is a diagram showing a method for newly defining PSI/SI data in order to access an Internet service channel related to a broadcast channel according to an embodiment of the present invention. The method for newly defining Program Specific Information (PSI)/ Service Information (SI) data in order to access an Internet service channel related to a broadcast channel according to an embodiment of the present invention will hereinafter be described with reference to FIG. 4.

Firstly, there is a method for adding an LCN_descriptor to a Network Information Table (NIT). Of course, it will be understood that another table may be used instead of the NIT and that the Logical Channel Number (LCN)_descriptor may be called a logical channel descriptor. This first method is a method for assigning the number of a dedicated data broadcast channel to an Internet service channel.

More specifically, the number of an Internet service channel (for example, the number of a dedicated data broadcast channel) is assigned to the LCN_descriptor located in the NIT. Then, a digital device decodes a Program Association Table (PAT) and receives a Program Map Table (PMT). Additionally, the digital device receives Application Information Table (AIT) data using an application_signaling_descriptor included in the PMT, and also receives auto-start application data using a data_broadcast_id_descriptor included in the PMT. Further, the digital device receives data related to an Internet service (for example, a service Uniform Resource Locator (URL), a service name, and a service icon) using application data included in the AIT. Accordingly, as shown in FIG. 4, if an auto-start application is present, the digital device directly switches to a channel, on which an Internet service is provided, without displaying a separate guide page.

Secondly, there is a method for adding a broadband_LCN_descriptor to the NIT. Of course, it will be understood that another table may be used instead of the NIT and that the broadband_LCN_descriptor may be called a logical channel descriptor. This second method is a method for separately book marking an Internet service channel. Using this second method provides an advantage of enabling direct access to the Internet even without broadcast signals.

More specifically, the number of an Internet service channel is assigned to the broadband_LCN_descriptor located in the NIT. The digital device decodes the PAT and receives the PMT. Additionally, the digital device receives the AIT data using the application_signaling_descriptor included in the PMT. Further, the digital device receives data related to an Internet service (for example, a service URL, a service name, and a service icon) using application data included in the AIT. The digital device stores, in a channel database (DB), the number of an Internet service channel defined in the broadband_LCN_descriptor and the related data (for example, a service URL, a service name, and a service icon). Accordingly, as shown in FIG. 4, if the number of a bookmarked Internet service channel number is selected, the digital device directly switches to a channel, on which an Internet service is provided, without displaying a separate guide page.

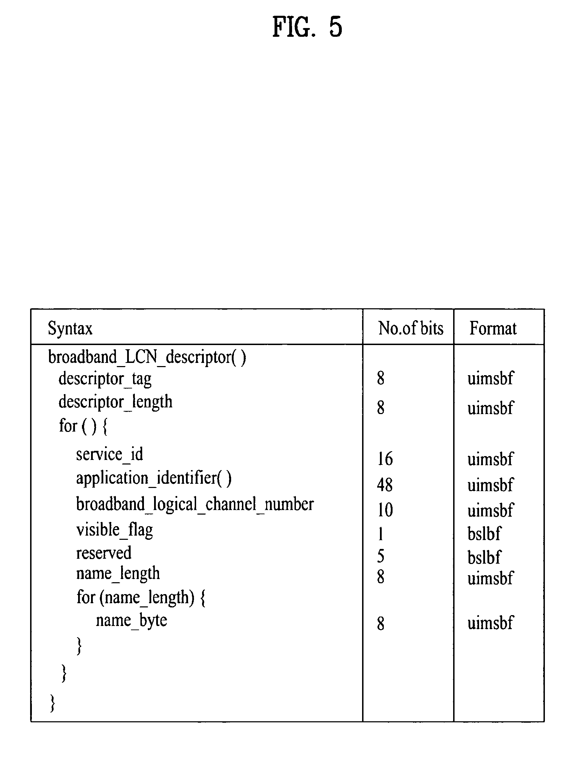

Meanwhile, it is necessary to design the boradband_LCN_descriptor so as to include a greater quantity of data than that in the LCN_descriptor. This will hereinafter be described in more detail with reference to FIG. 5.

FIG. 5 is a diagram showing syntax of the logical channel descriptor shown in FIG. 4 in more detail. As described above, the logical channel descriptor may correspond to the broadband_LCN_descriptor.

The present invention has a feature in that, for example, the broadband_LCN_descriptor as shown in FIG. 5 is defined and used to ensure rapid switching to an Internet service channel related to a currently displayed broadcast channel.

A descriptor_tag field shows data identifying a corresponding descriptor.

A descriptor_length field shows a length or a size of a descriptor.

A service_id field shows a characteristic value with respect to a virtual channel being broadcast. It is possible to maintain a mapping relationship between an Internet service channel and a related broadcast channel using this field. That is, the service_id field has the same value as a service ID of a channel broadcast when book-marking an application related to a corresponding Internet service. The service_id field is a criteria for judging whether or not to implement simulcast with a channel whose number is assigned to the LCN_descriptor.

An application_identifier field shows an inherent ID with respect to an Internet service, and for example may be constructed by an organization_id of 32 bits and an application_id of 16 bits.

A broadband_logical_channel_number field shows data identifying the number of an Internet service channel (for example, the number of a dedicated Internet bookmark channel) that enables rapid access to the Internet when connected to an Internet network.

If a visible_flag field has a value of zero, this means an invisible service, and if the visible_flag field has a value of 1, this means a visible service. The invisible service is not seen in an Electronic Program Guide (EPG), a bookmark list, and a TV portal, and may be used for the purpose of testing, service preparation, or the like.

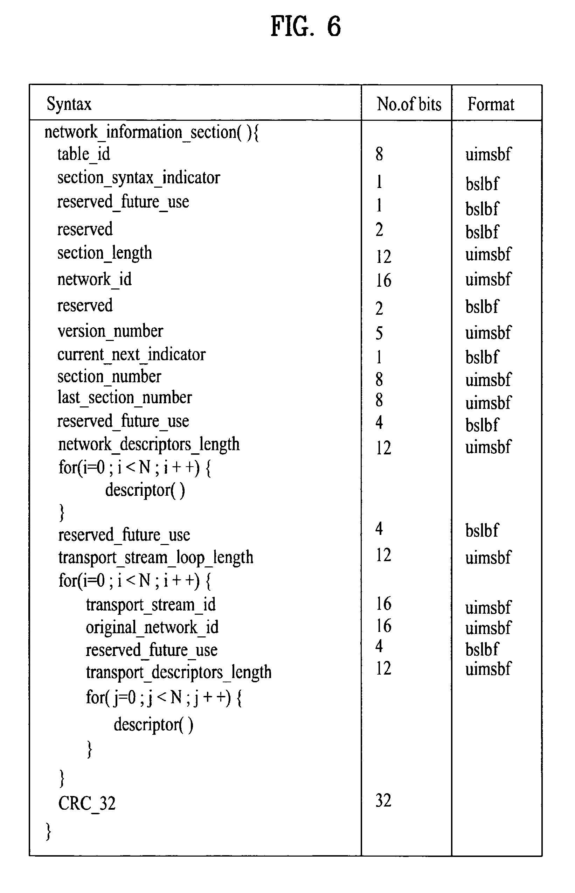

FIG. 6 is a diagram showing syntax of the Network Information Table (NIT) to which the logical channel descriptor shown in FIG. 5 can belong. One example of the NIT will hereinafter be described with reference to FIG. 6. However, it will be understood that the descriptor of FIG. 5 according to the embodiment of the present invention may be designed to belong to another table other than the NIT.

A table_id field shows data identifying a corresponding table.

A section_syntax_indicator field is a 1 bit field and can be designed to have a value of 1.

A section_length field is a 12 bit field, and the first two bits are designated to 00. The section_length field shows data identifying byte numeral of a section.

A network_id field is a 16 bit field and functions as a label identifying a delivery system.

A version_number field is a 5 bit field and shows the version number of a sub table.

A current_next_indicator field is a 1 bit indicator.
If the current_next_indicator field is designed to have a value of 1, this represents that a sub-table is a currently applicable sub-table. On the other hand, if current_next_indicator field has a value of zero, this represents that a transmitted sub-table is not yet available.

A section_number field is a 8 bit field and shows the number of a section.

A last_section_number field is a 8 bit field and shows the number of a last section.

A network_descriptors_length field shows the overall byte length of following network descriptors.

A transport_stream_loop_length field is a 12 bit field and shows the overall byte length of TS loops.

A transport_stream_id field functions as a label of an ID with respect to a TS from another multiplex within the transmission system.

An original_network_id field is a 16 bit field and provides data about a label that identifies a network_id of an originating transmission system.

A transport_descriptors_length field is a 12 bit field and shows the overall byte length of TS descriptors.

A CRC_32 field is a 32 bit field, and includes a CRC value that provides a zero output of registers in a decoder.

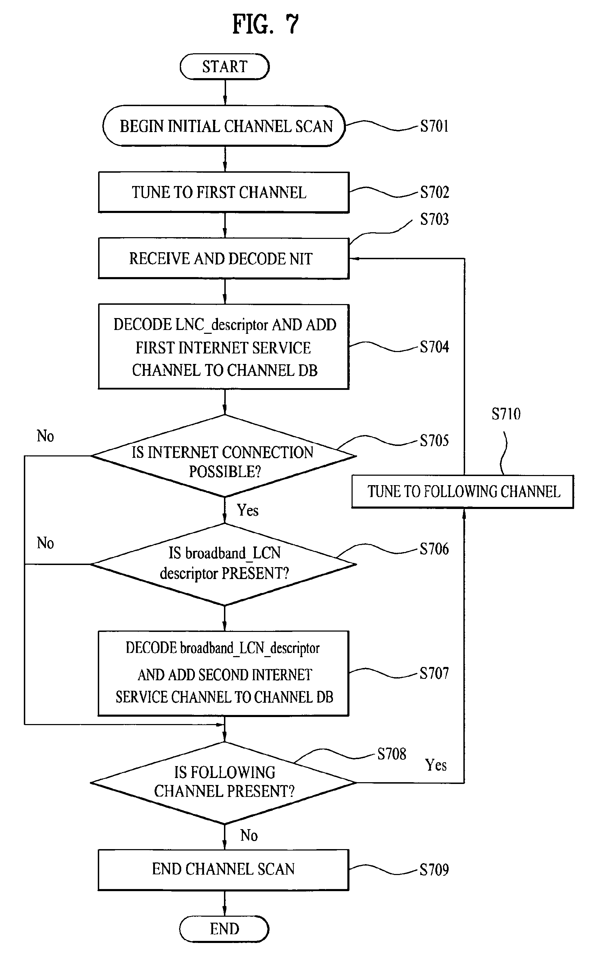

FIG. 7 is a diagram showing a process of implementing a channel scanning sequence using a newly defined logical channel descriptor according to an embodiment of the present invention. The process of implementing a channel scanning sequence using a newly defined logical channel descriptor according to the embodiment of the present invention will hereinafter be described with reference to FIG. 7.

The digital device according to the embodiment of the present invention begins initial channel scanning (S701). The digital device is tuned to a first channel (S702). The digital device receives and decodes an NIT (S703). The NIT, for example, may have a data structure shown in FIG. 6.

The digital device decodes an LCN_descriptor located in the NIT, and adds the number of a first Internet service channel to a channel DB (S704). However, it will be understood that, for example, another table may be used instead of the NIT. Furthermore, the LCN_descriptor may be constructed by erasing the "application_identifier" field, the "visible_flag" field, the "name_length" field, and the "name_byte" field from the broadband_LCN_descriptor shown in FIG. 5.

The digital device judges whether or not broadband connection is possible (S705). If the judged result is that broadband connection is possible, it is judged whether or not a broadband_LCN_descriptor is present in the NIT (S706). If the judged result is that the broadband_LCN_descriptor is present, the digital device decodes the broadband_LCN_descriptor, and adds the number of a second Internet service channel to the channel DB (S707).

The digital device judges whether or not a following channel is present (S708) . If the judged result is that the following channel is present, the digital device is tuned to the following channel (S710). If the judged result is that the following channel is not present, the digital device ends channel scan (S709).

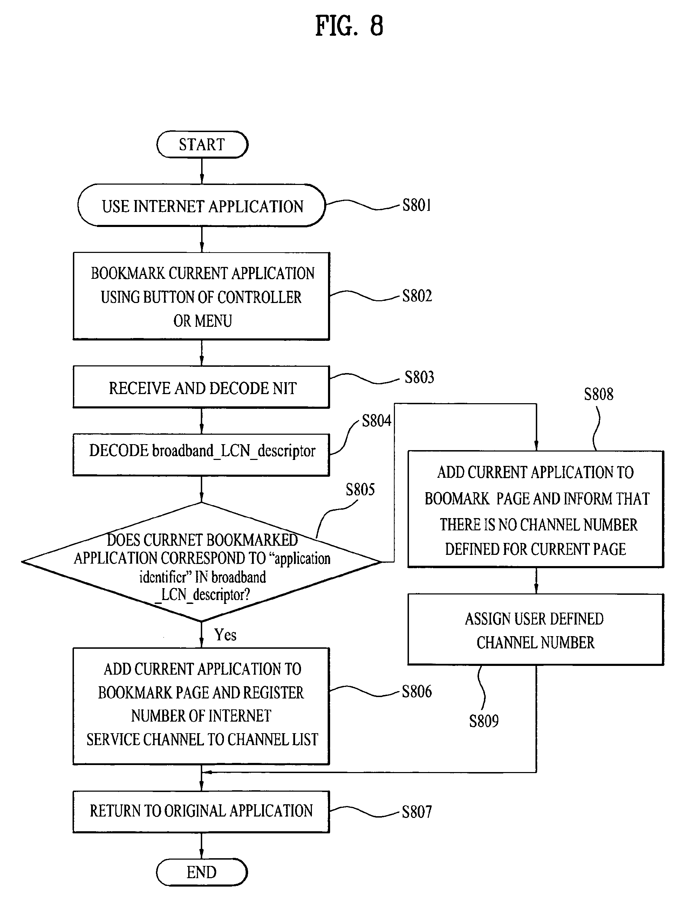

FIG. 8 is a diagram showing a process of implementing a book marking sequence using a newly defined logical channel descriptor according to an embodiment of the present invention. The process of implementing a book marking sequence using a newly defined logical channel descriptor according to the embodiment of the present invention will hereinafter be described with reference to FIG. 8.

The digital device according to the embodiment of the present invention uses an Internet application (S801). The digital device bookmarks a current application using a button of a controller or a menu (S802).

The digital device looks up the downloaded NIT, or downloads or decodes the NIT (S803). The digital device decodes the broadband_LCN_descriptor present in the NIT (S804). However, it will be understood that, for example, another table may be used instead of the NIT. One example of the broadband_LCN_descriptor is shown in FIG. 5.

The digital device judges whether or not the current bookmarked application corresponds to an "application_identifier" in the broadband_LCN_descriptor (S805). If the judged result is that the current bookmarked application corresponds to the "application_identifier", the digital device adds the current application to a bookmark page, and registers the number of an Internet service channel to a channel list (using a "broadband_logical_channel_number field in the broadband_LCN_descriptor) (S806). Then, the digital device returns to an original application (S807).

If the judged result is that the current bookmarked application does not correspond to the "application_identifier", the digital device adds the current application to the bookmark page, and shows a message informing that there is no channel number defined for a current page (S808). Thus, the digital device assigns the number defined by a user to a corresponding channel (S809).

The present invention will again be concisely described as follows with reference to the above described drawings.

The digital device, which is able to access broadcast networks and Internet Protocol (IP) networks, receives broadcast data through a broadcast network, and receives IP signals through an IP network.

Further, the digital device detects data identifying an Internet service channel on which the IP signals contained in the broadcast data can be received. Then, the digital device accesses the Internet service channel on which the IP signals can be received, based on the detected data.

The broadcast data, for example, may correspond to the Network Information Table (NIT) shown in FIG. 6. The digital device is designed in such a way that the data identifying the Internet service channel on which the IP signals can be received, for example, is defined in the logical channel descriptor shown in FIG. 5.

Furthermore, if the IP signals are signals mapped to a broadcast service channel, the logical channel descriptor, as shown in FIG. 5, includes data identifying a broadcast channel mapped to the IP signals (for example, the "application_identifier" field of FIG. 5) and data identifying the logical number of a channel on which the IP signals can be received (for example, the "broadband_logical_channel_number" field of FIG. 5).

The digital device, for example, corresponds to any one of a Digital Television (DTV), a Hybrid Broadcast Broadband Television (HBBTV), an Internet Protocol Television (IPTV), a mobile phone, a smart phone, and the like.

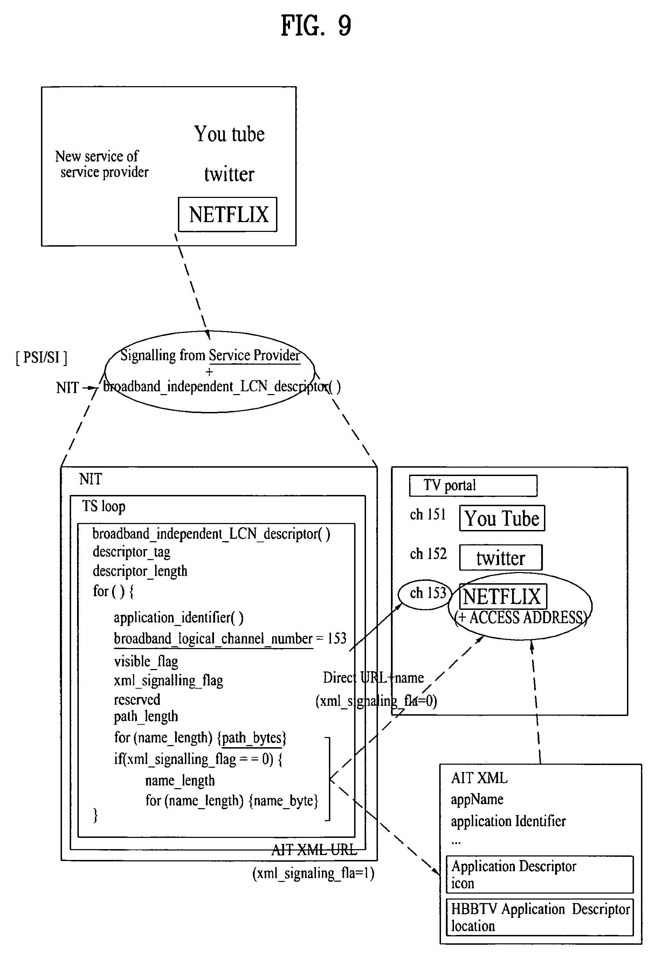

FIG. 9 is a view showing a method for newly defining PSI/SI data in order to access an Internet service channel independent of a broadcast channel according to another embodiment of the present invention. The method for newly defining PSI/SI data in order to access an Internet service channel independent of a broadcast channel according to another embodiment of the present invention will hereinafter be described with reference to FIG. 9.

The method of the present embodiment is a channel number assignment method for assisting a server in registering (i.e. book-marking) applications provided in a TV portal format, for example, applications independent of a broadcast. For example, this method may be more useful when a satellite or a cable provider provides an independent Internet service. Furthermore, the present embodiment has an advantage in that a process of parsing a PMT, a PAT, an AIT, and the like can be omitted.

According to the present embodiment, as shown in FIG. 9, the number of an Internet service channel is assigned to a broadcast_independent_LCN_descriptor located in the NIT. Of course, it will be understood that another table may be used instead of the NIT and that the broadcast_independent_LCN_descriptor may be called a logical channel descriptor.

The present embodiment may be classified into the following two sub-embodiments.

Firstly, an embodiment in which data, such as a URL and a service name, for access to a corresponding service are directly acquired by decoding the broadcast_independent_LCN_descriptor is possible.

Secondly, an embodiment in which AIT XML access data (for example, a URL) is acquired by decoding the broadcast_independent_LCN_descriptor is possible. In the case of the above described design, first, common AIT data, such as service access data, a service name, a service icon, and the like, is acquired by accessing the AIT XML access data.

Meanwhile, optional data, such as data for access to the Internet, the service name, the service ion, and the like, acquired through the above described first or second embodiment is stored in a channel DB. Thus, in the case in which the service name or the service icon stored in the channel DB is selected, it is possible to rapidly access an Internet service using the Internet access data.

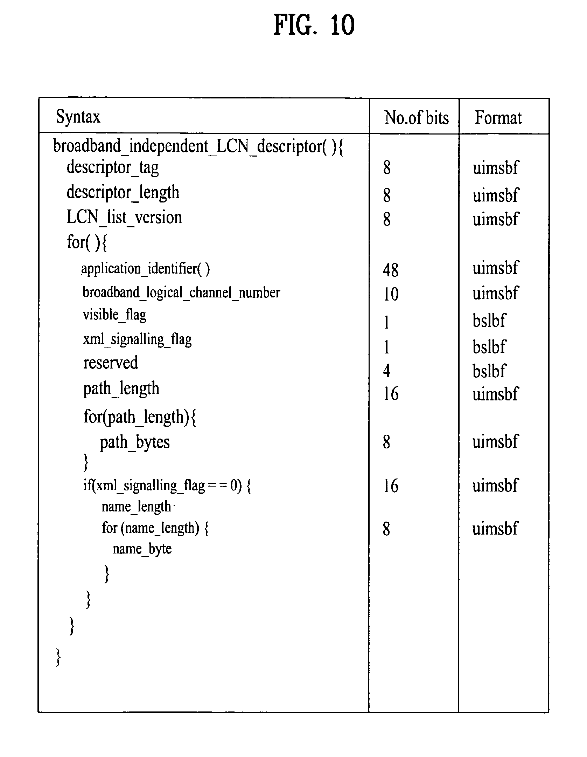

Alternatively, it may be necessary to design the broadband_independent_LCN_descriptor differently from the descriptor shown in FIG. 5. This will hereinafter be described in more detail with reference to FIG. 10.

FIG. 10 is a diagram showing syntax of the logical channel descriptor shown in FIG. 9 in more detail. The syntax of the logical channel descriptor shown in FIG. 9 will hereinafter be described in more detail with reference to FIG. 10.

A descriptor_tag field includes data identifying a corresponding descriptor.

A descriptor_length field shows a length or a size of the descriptor.

An LCN_list_version field shows the version of a service list. If a broadband_logical_channel_number that will be described hereinafter is changed, the corresponding version is increased. This allows a receiver to easily update the service list using the LCN_list_version.

An application_identifier field shows an inherent ID with respect to an Internet service, and is constructed by an organization_id of 32 bits and an application_id of 16 bits.

A broadband_logical_channel_number field shows the number of a dedicated Internet bookmark channel, which enables rapid access to the Internet.

A visible_flag field generally has a value of 1. If the visible_flag field has a value of zero, this means an invisible service. For example, an invisible service is not seen in an EPG, a bookmark list, and a TV portal.

An xml_signaling_flag field shows whether access data with respect to the number of a corresponding Internet service channel is directly signaled, or is signaled through an AIT XML. For example, if a field value is zero, names of an application and URL for an Internet service are directly transmitted. On the other hand, if the field value is 1, a URL of an AIT XML is transmitted.

A path_length field shows a length of a service URL in bytes if the xml_signaling_flag has a value of zero. On the other hand, if the xml_signaling_flag has a value of 1, the path_length field shows a length of a URL of the AIT XML in bytes.

A path_byte field shows a service URL if the xml_signaling_flag has a value of zero. On the other hand, if the xml_signaling_flag has a value of 1, the path_byte field shows a URL of an AIT XML.

A name_length field is used if the xml_signaling_flag has a value of zero, and shows a length of a service name in the unit of a byte.

Also, a name_byte field shows a service name.

The method for rapidly accessing an Internet service independent of a broadcast service channel according to another embodiment of the present invention will hereinafter be described with reference to FIGs. 6, 9 and 10.

The digital device, which is able to access broadcast networks and Internet Protocol (IP) networks, receives broadcast data through a broadcast network, and receives IP signals through an IP network. The digital device detects data identifying an Internet service channel on which the IP signals contained in the broadcast data can be received, and accesses the Internet service channel on which the IP signals can be received, based on the detected data.

The broadcast data, for example, may correspond to the Network Information Table (NIT) shown in FIG. 6. The data identifying the Internet service channel on which the IP signals can be received, for example, is defined in the logical channel descriptor shown in FIG. 10.

If the IP signals are signals independent of a broadcast service channel, the logical channel descriptor, as shown in FIG. 10, includes data identifying an Uniform Resource Locator (URL) on which the IP signals can be received (for example, the "path_byte" field of FIG. 10) and data identifying the logical channel number on which the IP signals can be received (for example, the "broadband_logical_channel_number" field of FIG. 10).

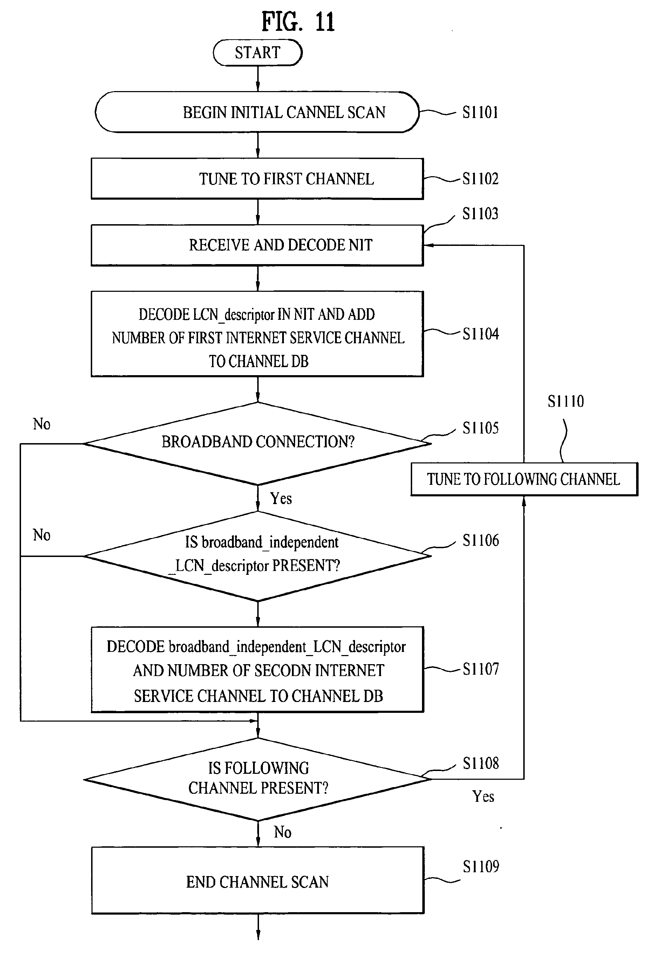

FIG. 11 is a diagram showing a process of implementing a channel scanning sequence using a newly defined logical channel descriptor according to another embodiment of the present invention. The process of implementing a channel scanning sequence using a newly defined logical channel descriptor according to another embodiment of the present invention will hereinafter be described with reference to FIG. 11.

The digital device according to another embodiment of the present invention begins initial channel scanning (S1101). The digital device is tuned to a first channel (S1102). The digital device receives and decodes an NIT (S1103). The NIT, for example, may have a data structure shown in FIG. 6.

The digital device decodes an LCN_descriptor located in the NIT, and adds the number of a first Internet service channel to a channel DB (S1104). However, it will be understood that, for example, another table may be used instead of the NIT. Furthermore, the LCN_descriptor may be constructed by erasing the "application_identifier" field, the "visible_flag" field, the "name_length" field, and the "name_byte" field from the broadband_LCN_descriptor shown in FIG. 5.

The digital device judges whether or not broadband connection is possible (S1105). If the judged result is that broadband connection is possible, it is judged whether or not a broadband_independent_LCN_descriptor is present in the NIT (S1106). If the judged result is that the broadband_independent_LCN_descriptor is present, the digital device decodes the broadband_independent_LCN_descriptor and adds the number of a second Internet service channel to the channel DB (S1107).

The digital device judges whether or not a following channel is present (S1108). If the judged result is that the following channel is present, the digital device is tuned to the following channel (S1110). If the judged result is that the following channel is not present, the digital device ends channel scan (S1109).

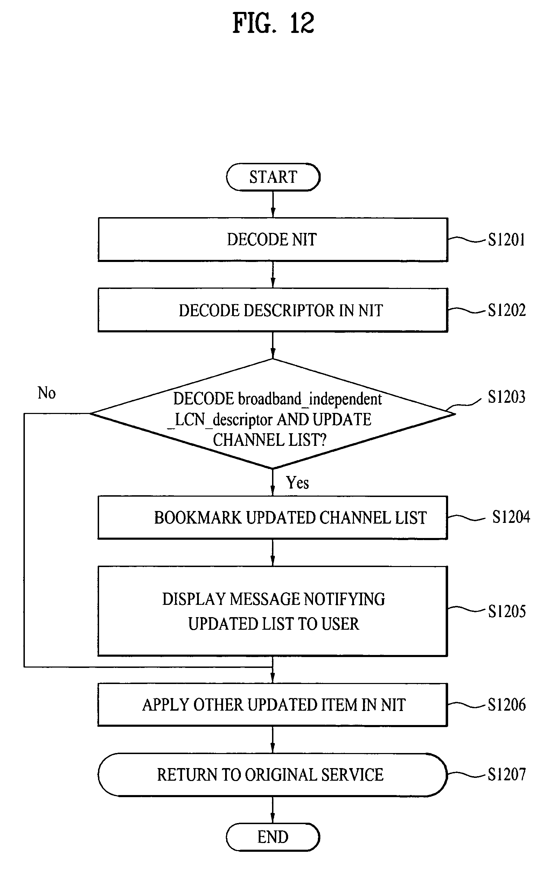

FIG. 12 is a view showing a method for updating an Internet service list independent of a broadcast channel using a newly defined logical channel descriptor according to another embodiment of the present invention. The method for updating an Internet service list that is independent of a broadcast channel using a newly defined logical channel descriptor according to another embodiment of the present invention will hereinafter be described with reference to FIG. 12.

The digital device according to another embodiment of the present invention decodes an NIT (S1201). The NIT, for example, may be designed as shown in FIG. 6, and another table may be used according to a demand of those skilled in the art. The digital device decodes descriptors located in the NIT (S1202). The digital device judges whether or not it is necessary to update a channel list by decoding a broadccast_independent_LCN_descriptor located in the NIT (S1203). In this case, the LCN_list_version field shown in FIG. 10 may be used.

The digital device bookmarks the updated list (S1204). The digital device displays a message notifying the updated list to the user (S1205).

Furthermore, the digital device applies other updated items in the NIT (S1206). Then, the digital device returns to an original service (S1207).

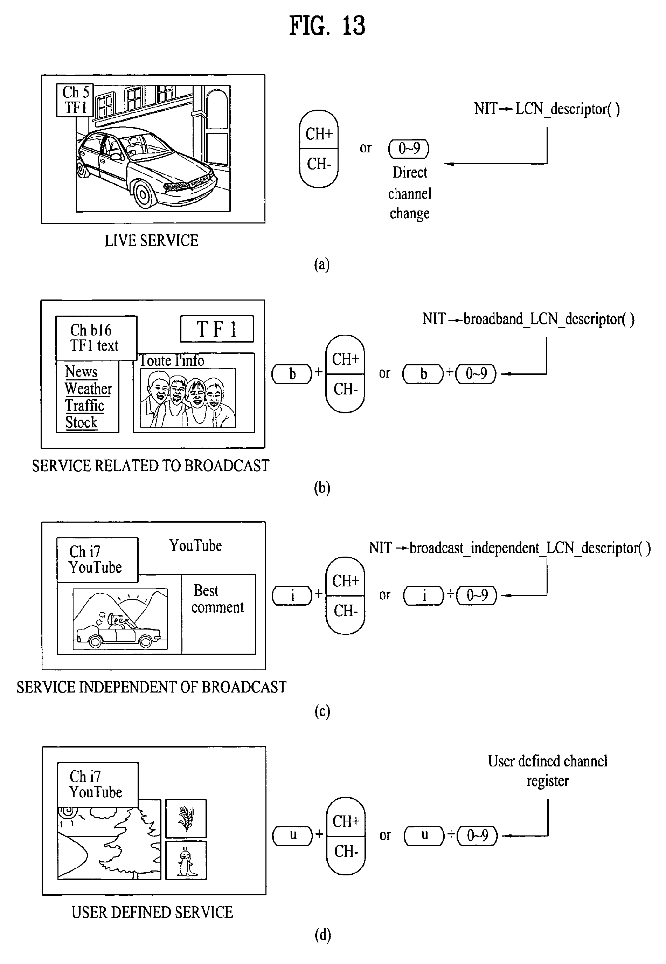

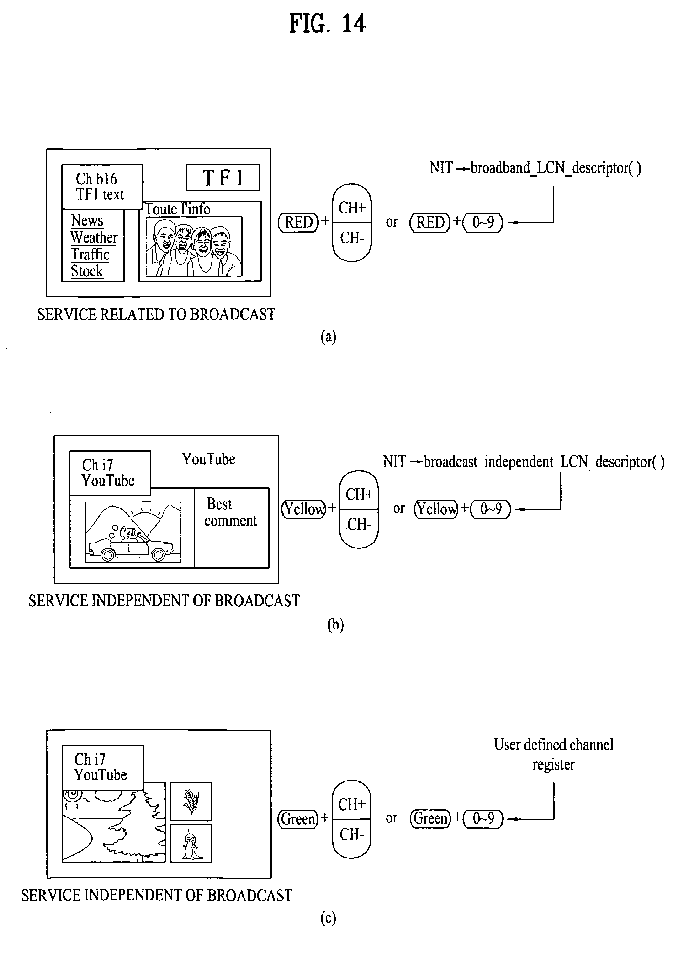

FIG. 13 is a diagram showing a user interface to rapidly access an Internet service channel according to an embodiment of the present invention. FIG. 14 is a diagram showing a user interface to rapidly access an Internet service channel according to another embodiment of the present invention. Hereinafter, a variety of user interfaces to rapidly access an Internet service channel will be described with reference to FIGs. 13 and 14.

As shown in FIG. 13 or 14, an Internet service channel and a broadcast service channel may be distinguished from each other by inserting a separate delimiter into a channel.

More specifically, according to the kind of a descriptor transmitted via SI signaling of an NIT, and the like, if general broadcast data (for example, an LCN_descriptor) is received, a new channel number is stored in a general channel map, and if Internet service data related to a broadcast (for example, a broadband_LCN_descriptor) is received, a new channel number is stored in a related channel map. Also, if independent Internet service data (for example, a broadcast_independent_LCN_descriptor) is received, a new channel number is stored in an independent channel map, and a channel number that the user directly registers is stored in a user channel map.

Accordingly, as shown in FIG. 13(a), in the case in which only channel up/down buttons or channel numbers are selected, switching to a general broadcast channel is carried out. As shown in FIG. 13(b), in the case in which channel up/down buttons or channel numbers are selected along with a "b" button, switching to an Internet service channel related to a broadcast is carried out.

Furthermore, as shown in FIG. 13(c), in the case in which channel up/down buttons or channel numbers are selected along with an "i" button, switching to an Internet service channel independent of a broadcast is carried out. As shown in FIG. 13(d), in the case in which channel up/down buttons or channel numbers are selected along with a "u" button, switching to a user defined channel is carried out.

Meanwhile, as shown in FIG. 14(a), in the case of channel up/down buttons or channel numbers are selected along with a "red" button, switching to an Internet service channel related to a broadcast is carried out. As shown in FIG. 14(b), in the case in which channel up/down buttons or channel numbers are selected along with a "yellow" button, switching to an Internet service channel independent of a broadcast is carried out. Also, as shown in FIG. 14(c), in the case in which channel up/down buttons or channel numbers are selected along with a "green" button, switching to a user defined channel is carried out.

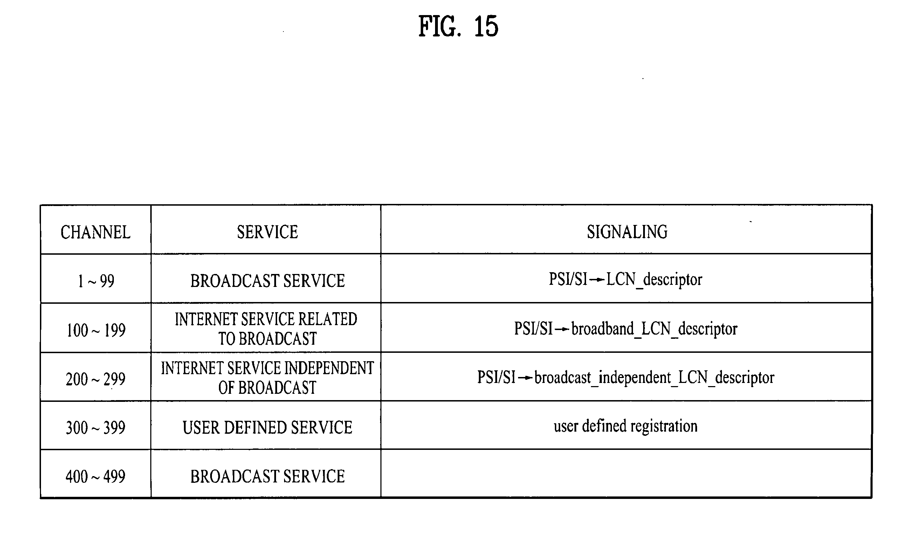

FIG. 15 is a diagram showing a method for constructing a channel map by grouping a plurality of services according to an embodiment of the present invention. The method for constructing a channel map by grouping a plurality of services according to the embodiment of the present invention will hereinafter be described with reference to FIG. 15.

As shown in FIG. 15, it is contemplated that channel numbers are divided by a constant range so as to distinguish a channel number region that can be used by each service. That is, channels that can be designated are distinguished according to a channel number signaling method.

When using a database designed as shown in FIG. 15, the digital device able to access broadcast networks and Internet Protocol (IP) networks according to another embodiment of the present invention receives broadcast data via a broadcast network and receives IP signals via an IP network. Further, the digital device detects data identifying an Internet service channel on which the IP signals contained in the broadcast data can be received. Then, the digital device accesses the Internet service channel on which the IP signals can be received based on the detected data. Also, the digital device stores broadcast service channels within a first range in a channel list, and stores Internet service channels within a second range in the channel list. Accordingly, if a channel number within the first range is selected, the digital device is tuned to a channel on which a corresponding broadcast service is provided. If a channel number within the second range is selected, the digital device is tuned to a channel on which a corresponding Internet service is provided.

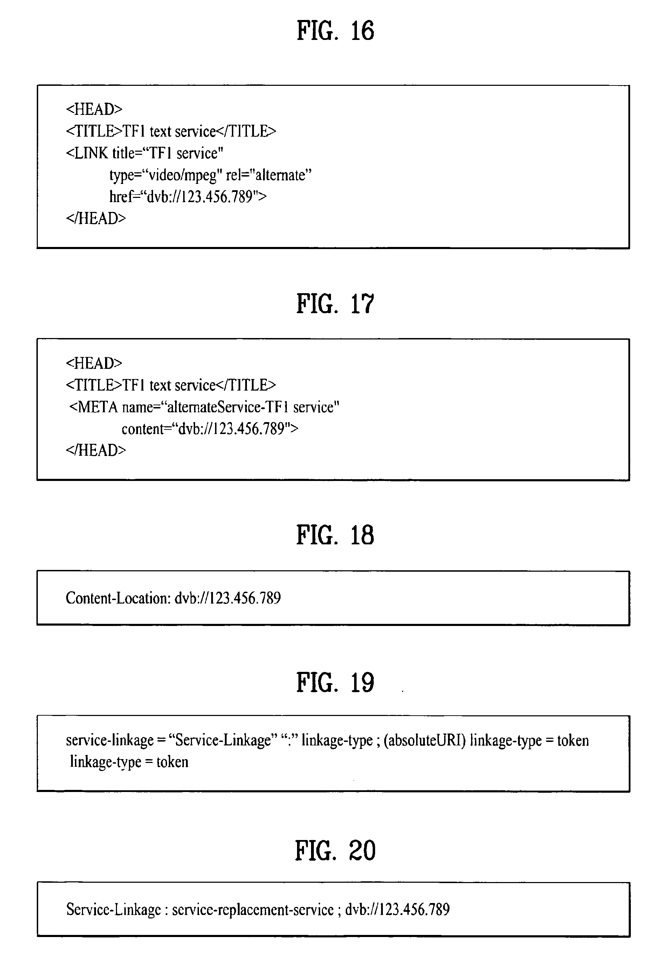

Through the above described embodiments, a first channel serving as a dedicated data service channel (for example, ch 6) and a second channel serving as an Internet service channel (for example, ch 103) are service channels which service the same content through different methods. Of course, it is noted that the first channel enables reception and transmission of related data using a broadcast network descriptor (for example, a DVB-SI type descriptor), whereas the second channel has difficulty in signaling existing broadcast data. A method for solving the above described problem will hereinafter be described in more detail with reference to FIGs. 16 to 20. In particular, the method will hereinafter be described in two divided parts, i.e. on the basis of the embodiment as shown in FIGs. 16 and 17 and the embodiment as shown in FIGs. 18 to 20.

FIG. 16 is a diagram showing first data required to return to content of a related broadcast channel in the middle of processing IP signals according to another embodiment of the present invention. FIG. 17 is a diagram showing second data required to return to content of a related broadcast channel in the middle of processing IP signals according to another embodiment of the present invention. Referring to FIGs. 16 and 17, for example, the embodiment in which a link element is added to a head section of an HTML page so as to achieve signaling of related original existing broadcast content data will hereinafter be described.

In the embodiment shown in FIGs. 16 and 17, a DVB-Triplet of a related existing broadcast is provided in a DVB URL format using Href properties of a link element, a media type with respect to content of the related existing broadcast is provided using type properties, and a relationship is described using ref properties.

As shown in FIG. 16, a title of an HTML document is defined as "TFI text service", which means content of an Internet broadcast channel (for example, ch 103). Further, data about an existing broadcast channel (for example, ch 6) related to the Internet broadcast channel is defined in the head section using the link element. In addition, as shown in FIG. 16, the URL format of the DVB-Triplet is defined as, for example, "dvb://123.456.789", a mime-type is defined as, for example, "video/mpeg", and a relationship is defined as, for example, "alternate".

Although not shown in FIG. 16, data linked to an existing broadcast may additionally be defined as follows. If the relationship shown in FIG. 16 is not defined as "alternate", but is defined as "service-replacement-service", it means a service capable of substituting for a particular service in the case in which the particular service cannot be used.

Meanwhile, if the relationship is not defined as "alternate", but is defined as "hand-over", this means a service that can be used in the case of a mobile handover.

Also, if the relationship is not defined as "alternate", but is defined as "related service", this simply means a related service.

As compared to the embodiment of FIG. 16 in which data about related existing broadcast content is signaled using the link element, FIG. 17 shows an embodiment in which data about related existing broadcast content is signaled using a meta element.

FIG. 18 is a diagram showing third data required to return to content of a related broadcast channel in the middle of processing IP signals according to another embodiment of the present invention. FIG. 19 is a diagram showing fourth data required to return to content of a related broadcast channel in the middle of processing IP signals according to another embodiment of the present invention. Also, FIG. 20 is a diagram showing fifth data required to return to content of a related broadcast channel in the middle of processing IP signals according to another embodiment of the present invention.

The embodiment for signaling data about related original existing broadcast content using, for example, a HTTP Response Header will hereinafter be described with reference to FIGs. 18 to 20.

When Internet broadcast content is received using an HTTP protocol, reception and transmission of related existing broadcast data added to a header of an HTTP response that is a response with respect to a content request. In detail, an existing content location header may be used, or a new header may be added and used.

FIG. 18 illustrates a method using an existing content location header. In addition, a URL format of a DVB-Triplet of an existing broadcast channel is usable as a URL of substitutable content.

Meanwhile, a method for adding a new header can be defined as shown in FIG. 20. More specifically, as shown in FIG. 20, the above described values, such as, for example, "service-replacement-service", "hand-over", and "related-service", may be used as a linkage type, and a DVB-Triplet of a related existing broadcast can be defined in a URL format.

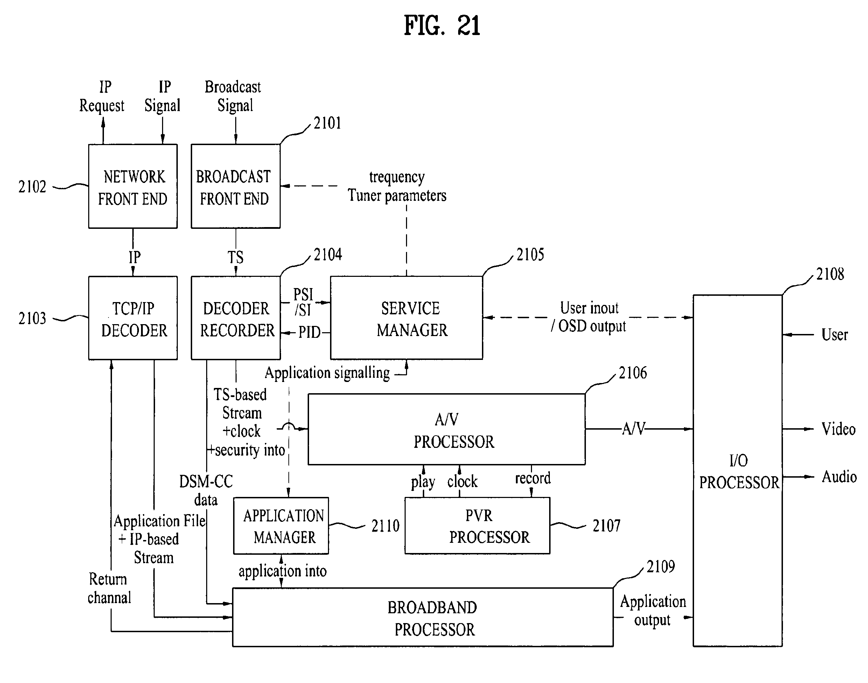

FIG. 21 is a diagram showing a module of a digital device able to access broadcast networks and IP networks according to an embodiment of the present invention. The digital device able to access broadcast networks and IP networks according to the embodiment of the present invention will hereinafter be described functionally with reference to FIG. 21.

As shown in FIG. 21, the digital device according to the embodiment of the present invention includes, for example, a broadcast front end 2101, a network front end 2102, a Transmission Control Protocol (TCP)/ Internet Protocol (IP) decoder 2103, a system decoder 2104, a service manager 2105, an Audio/Video (A/V) processor 2106, a Personal Video Recorder (PVR) processor 2107, an I/O processor 2108, a broadband processor 2109, and an application manager 2110. Of course, it is noted that the scope of the present invention is basically defined by the accompanying claims, and FIG. 21 is simply given to explain one embodiment of the present invention.

The broadcast front end 2101 receives broadcast signals based on a tuning parameter and a frequency set by a service manager, decodes the received broadcast signals to a format suit to a transmission method, and outputs a Transport Stream (TS).

The network front end 2102 receives IP data requested by a broadband processor, or transmits response data of a receiver to a particular IP address.

The TCP/IP decoder 2103 decodes IP signals and transmits the decoded IP signals to the broadband processor.

The system decoder 2104 receives a corresponding packet based on PID data, decodes the received packet, and outputs signaling section data or an A/V Data packet. The signaling data is transmitted to the service manager, the A/V package is transmitted to the A/V processor, and the data packet is transmitted to the broadband processor.

The service manager 2105 performs system control related to the entire service provided by a service provider. The service manager controls the entire service according to a service list and access data based on PSI/SI data. In addition, the service manager manages tuner related control data, such as a frequency, a guard interval, and the like, provided by PSI/SI data, and manages operation with respect to a user input related to a channel and an EPG (for example, channel change, and the like).

The A/V processor 2106 decodes an A/V stream, and processes scrambles, and transmits the decoded stream to the I/O processor after synchronization.

The PVR processor 2107 effects control of functions related to a PVR (DVR), i.e. operations related to storage and playback of a stream. During recording of a stream, the PVR processor adds data, such as a timestamp, a random access point, and the like, to an A/V stream and stores the added data. During playback of a stream, the PVR processor transmits an A/V stream to the A/V processor, along with data, such as a timestamp, a random access point and the like.

The I/O processor 2108 implements functions related to user input and A/V output. For example, the I/O processor processes user input, effects control of an EPG and an On Screen Display (OSD), and outputs audio and video data.

The broadband processor 2109 may decode the packet transmitted to the TCP/IP decoder according to an encoded protocol, may process the decoded packet based on the kind of content, and may transmit the processed packet to the I/O processor.

The application manager 2110 receives data from a related IP address based on application signaling data transmitted from the service manager, selects an application to be loaded/executed in the broadband processor, and manages a life cycle.

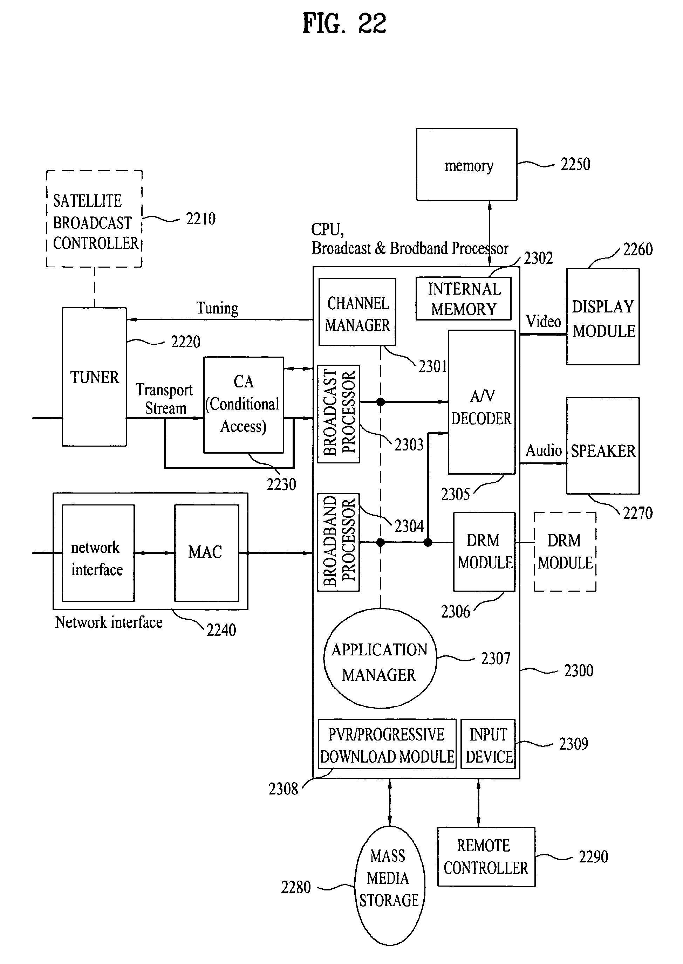

FIG. 22 is a diagram showing a module of a digital device able to access broadcast networks and IP networks according to another embodiment of the present invention. The digital device able to access broadcast networks and IP networks according to another embodiment of the present invention will hereinafter be described in terms of hardware with reference to FIG. 22.

As shown in FIG. 22, the digital device according to the embodiment of the present invention includes, for example, a satellite broadcast controller 2210, a tuner 2220, a Conditional Access (CA) 2230, a network interface 2240, a memory 2250, a display module 2260, a speaker 2270, a mass media storage 2280, a remote controller 2290, and a controller 2230. However, it is noted that the scope of the present invention is defined in principle by the accompanying claims and FIG. 22 is given to explain one embodiment of the present invention.

The satellite broadcast controller 2210 sets and controls a reception frequency and a parameter of an antenna in such a way as to ensure that a satellite broadcast receiver receives a satellite broadcast.

The tuner 2220 receives broadcast signals based on a preset frequency and tuning parameter.

The CA 2230 descrambles a scrambled stream based on a given authority, or implements various data processing based on a given condition.

The network interface 2240 is a module for connection with a network, such as the Internet, and the like. For example, the network interface may include a network physical layer (Phy), a Medium Access Control (MAC) layer, and the like.

The memory 2250 stores initial boot code (for example, a Read Only Memory (ROM)), and is used as a main memory for a variety of operations (for example, a Random Access Memory (RAM)). The memory stores non-volatile data required to operate a TV (for example, a Nonvolatile RAM (NVRAM)).

The display module 2260 outputs video data, and the speaker 2270 outputs audio data.

The mass media storage 2280 is a module for storing a PVR function and large media or files. The mass media storage, for example, includes a Hard Disk Drive (HDD).

The remote controller 2290 is an interface for remotely controlling a digital device.

The controller 2300 serves to control all main functions of a digital device. For example, the controller 2300 may take the form of a Central Processing Unit (CPU), a decoder, and a main chip set. The controller 2300, as shown in FIG. 22, includes, for example, a channel manager 2301, an internal memory 2302, a broadcast processor 2303, a broadband processor 2304, an A/V decoder 2305, a Digital Rights Management (DRM) module 2306, an application manager 2307, a PVR/progressive download module 2308, and an input device 2309.

The channel manager 2301 controls storage/loading of channel data and also effects control of peripheral devices. The internal memory 2302 is a small capacity memory for debugging and system management. The broadcast processor 2303 receives a broadcast stream and the broadband processor 2304 receives an Internet packet.

The A/V decoder 2305 decodes an audio/video packet and transmits the decoded packet to an output module. The DRM module 2306 decodes copy protection data of an input stream based on certification information. The application manager 2307 manages an application of a data/Internet server.

The PVR/progressive download module 2308 is a controller of a large capacity external device. For example, the PVR/progressive download module, for example, effects control of a time shift, and input and output of recorded and downloaded content. The input device 2309 processes input signals from an external device (for example, a remote controller, and the like).

Further, the broadcast front end 2101 of the digital device able to access broadcast networks and IP networks according to the embodiment of the present invention receives broadcast data through a broadcast network. It is noted that the broadcast front end 2101 may be called a tuner.

The network front end 2102 of the digital device receives IP signals through an IP network. It is noted that the network front end 2102 may be called a network interface.

The service manager 2105 of the digital device detects data identifying an Internet service channel on which IP signals contained in the broadcast data can be received. The broadband processor 2109 of the digital device effects control of access to an Internet service channel on which IP signals can be received. It is noted that the broadband processor 2109 may be called a controller.

According to the embodiment of the present invention, the broadcast data corresponds to a Network Information Table (NIT), and the data identifying an Internet service channel on which IP signals can be received is defined in a logical channel descriptor within the NIT.

If the IP signals are signals independent of a broadcast service channel, the logical channel descriptor includes data identifying a Uniform Resource Locator (URL) on which the IP signals can be received, and data identifying a logical channel number on which the IP signals can be received.

If the IP signals are signals mapped to a broadcast service channel, the logical channel descriptor includes data identifying a broadcast channel mapped to the IP signals, and data identifying a logical channel number on which the IP signals can be received.

Although not shown in FIG. 21, the memory 2250 may be added as shown in FIG. 22. Accordingly, in the case of the digital device according to the embodiment of the present invention, a first memory serves to store broadcast service channels within a first range in a channel list, and a second memory serves to store Internet service channels within a second range different from the first range in the channel list.

The above described controller effects control in such a way as to ensure tuning to a channel providing a corresponding broadcast service if a channel number within the first range is selected, and effects control in such a way as to ensure tuning to a channel providing a corresponding Internet service when a channel number within the second range is selected.

In the embodiment of the present invention, the IP signals provided by the Internet service channel include URL data for accessing content provided by a broadcast service channel mapped with the Internet service channel.

According to the above described embodiment of the present invention, it is possible to achieve an expanded navigation function with respect to an Internet service as a result of setting a channel number to an existing service using the Internet. Further, according to the embodiment of the present invention, it is possible to more dynamically manage an Internet service channel list by signaling the channel number using broadcast data when searching a channel or changing an Internet service.

All the methods according to the present invention may be realized in the form of a program command, which can be implemented via a variety of computer means and can be recorded in a computer readable medium. The computer readable medium may include a program command, a data file, a data structure, or the like or a combination thereof. The program command recorded in the medium may be specifically designed or constructed for the present invention, or may be known to and used by those skilled in the field of computer software.

Examples of the computer readable recording medium include magnetic media, such as a hard disk, a floppy disc, and a magnetic tape, optical media, such as a CD-ROM, and a DVD, and magneto-optical media, such as a floptical disk, and a hardware device specifically configured to store and implement a program command, such as a ROM, a RAM, a flash memory, and the like. Examples of the program command include a machine language code made by a compiler as well as high level language code able to be executed by a computer using an interpreter, and the like. The hardware device may be constructed to operate as one or more software modules for implementing operations of the present invention, or one or more software modules may be constructed to operate as a hardware device.

Although the present invention has been described with reference to the embodiments and the drawings, the present invention is not limited to the above embodiments, and those skilled in the art will appreciate that various modifications and variations can be made from the above description.

Accordingly, the invention should not be limited to the specific embodiments described herein, but should be determined by the following claims and equivalents thereof.

### [Mode for Intention]

A related description has sufficiently been discussed in the above "Mode for Invention".

### [Industrial Applicability]

As described above, the embodiments of the present invention may be wholly or partially applied to a digital broadcast system. Accordingly, the present invention is applicable to industries related to the digital broadcast system. In addition, the present invention is applicable even to the industrial field of a variety of digital devices capable of using a digital broadcast.

## Claims

1. A method for controlling a digital device able to access broadcast networks and Internet protocol (IP) networks, the method comprising:
receiving broadcast data via a broadcast network;
receiving IP signals via an IP network;
detecting data identifying an Internet service channel on which IP signals contained in the broadcast data can be received; and
accessing the Internet service channel on which the IP signals can be received, based on the detected data.

2. The method according to claim 1, wherein:
the broadcast data corresponds to a Network Information Table (NIT); and
the data identifying the Internet service channel on which the IP signals can be received is defined in a logical channel descriptor located in the NIT.

3. The method according to claim 2, wherein, if the IP signals are signals independent of a broadcast service channel, the logical channel descriptor includes:
data identifying a Uniform Resource Locator (URL) on which the IP signals can be received; and
data identifying a logical channel number on which the IP signals can be received.

4. The method according to claim 2, wherein, if the IP signals are signals mapped to a broadcast service channel, the logical channel descriptor includes:
data identifying a broadcast channel mapped to the IP signals; and
data identifying a logical channel number on which the IP signals can be received.

5. The method according to claim 1, further comprising:
storing, in a channel list, broadcast service channels within a first range;
storing, in the channel list, Internet service channels within a second range different from the first range;
turning to a channel providing a corresponding broadcast service if a channel number within the first range is selected; and
turning to a channel providing a corresponding Internet service if a channel number within the second range is selected.

6. The method according to claim 1, wherein the IP signals provided by the Internet service channel include URL data for accessing content provided by a broadcast service channel mapped to the Internet service channel.

7. The method according to claim 1, wherein the digital device corresponds to any one of a Digital Television (DTV), a Hybrid Broadcast Broadband TV (HBBTV), a mobile phone, and a smart phone.

8. A digital device able to access broadcast networks and Internet protocol (IP) networks, the device comprising:
a tuner for receiving broadcast data via a broadcast network;
a network interface for receiving IP signals via an IP network;
a service manager for detecting data identifying an Internet service channel on which IP signals contained in the broadcast data can be received; and
a controller for controlling to access to the Internet service channel on which the IP signals can be received, based on the detected data.

9. The digital device according to claim 8, wherein:
the broadcast data corresponds to a Network Information Table (NIT); and
the data identifying the Internet service channel on which the IP signals can be received is defined in a logical channel descriptor located in the NIT.

10. The digital device according to claim 9, wherein, if the IP signals are signals independent of a broadcast service channel, the logical channel descriptor includes:
data identifying a Uniform Resource Locator (URL) on which the IP signals can be received; and
data identifying a logical channel number on which the IP signals can be received.

11. The digital device according to claim 9, wherein, if the IP signals are signals mapped to a broadcast service channel, the logical channel descriptor includes:
data identifying a broadcast channel mapped to the IP signals; and
data identifying a logical channel number on which the IP signals can be received.

12. The digital device according to claim 8, further comprising:
a first memory for storing, in a channel list, broadcast service channels within a first range; and
a second memory for storing, in the channel list, Internet service channels within a second range different from the first range.

13. The digital device according to claim 12, wherein:
the controller controls to turn to a channel providing a corresponding broadcast service if a channel number within the first range is selected; and
the controller controls to turn to a channel providing a corresponding Internet service if a channel number within the second range is selected.

14. The digital device according to claim 8, wherein the IP signals provided by the Internet service channel include URL data for accessing content provided by a broadcast service channel mapped to the Internet service channel.

15. The digital device according to claim 8, wherein the digital device corresponds to any one of a Digital Television (DTV), a Hybrid Broadcast Broadband TV (HBBTV), a mobile phone, and a smart phone.
